# EUROPÄISCHE PATENTSCHRIFT

(11) **EP 0 902 386 B1**
(45) Veröffentlichungstag und Bekanntmachung des Hinweises auf die Patenterteilung: **12.10.2005**
(21) Anmeldenummer: 98112035.5
(22) Anmeldetag: 30.06.1998
(51) Int. Cl.: G06K 7/00, G06K 13/08

(54) **Kartenlesevorrichtung**
Card reader
Lecteur de carte

(30) Priorität: 03.09.1997 DE 19738412
(43) Veröffentlichungstag der Anmeldung: 17.03.1999
(73) Patentinhaber: National Rejectors Inc. GmbH, 21614 Buxtehude (DE)
(72) Erfinder: Glück, Anton, 21698 Harsefeld (DE); Meyer-Steffens, Klaus, 21717 Deinste (DE)
(74) Vertreter: Graalfs, Edo

(56) Entgegenhaltungen:
- DE-A- 3 518 247
- US-A- 5 508 501
- PATENT ABSTRACTS OF JAPAN vol. 097, no. 002, 28. Februar 1997 (1997-02-28) & JP 08 279240 A (NEURON:KK), 22. Oktober 1996 (1996-10-22)

## Beschreibung

Die Erfindung bezieht sich auf eine Kartenlesevorrichtung nach dem Oberbegriff des Patentanspruchs 1.

Kartenlesevorrichtungen sind üblicherweise an einer Tür eines Automaten oder dergleichen angebracht. Sie enthalten einen Einsteckschlitz für die Karte, der üblicherweise durch eine Schutzklappe verschlossen ist. Die Schutzklappe ist schwenkbar im Schlitzbereich gelagert und verhindert das Eindringen von Verunreinigungen. Außerdem ist die Schutzklappe so konstruiert, daß sie nur geöffnet werden kann, wenn eine Karte mit den genormten Abmessungen eingeführt wird. Werden andere Gegenstände eingerührt, wird eine Sperrung wirksam. Auf der Rückseite der Wand ist eine Leseeinheit angebracht. Sie nimmt die Karte während des Leseprozesses auf und enthält entsprechende Abtastmittel.

Die Leseeinheit ist mit einer Steuereinheit verbunden, welche die von der Leseeinheit kommenden Signale verarbeitet, z.B. die Karte identifiziert und den Speicherinhalt abliest und ggf. einen Betrag abbucht, usw.

Aus DE 3 518 247 A1 ist eine Kartenlesevorrichtung bekannt geworden, bei der eine Ver- und Entriegelungseinrichtung vorgesehen ist, die von einem im Ruhezustand in den Aumahmeschlitz ragenden und diesen zumindest teilweise versperrenden Haken gebildet ist. Der Haken übergreift die Karte im Lesezustand und ist mittels einer über eine Hebeleinrichtung auf den Haken einwirkende Taste aus dem Aufnahmeschlitz entfembar. Der Aufnahmeschlitz sowie die Ver- und Entriegelungseinrichtung sind innerhalb einer Frontplatte eines Automaten angeordnet. Die Frontplatte oder auch Schlitzeinheit ist separat von der Lesevorrichtung an der Frontplatte des Automaten befestigt.

Aus US-A-5,508,501, dem nächsten Stand der Technik, ist eine Kartenlesevorrichtung bekannt geworden, bei der Schlitzeinheit und Leseeinheit zusammen an der Tür eines Automaten angebracht werden. Eine Möglichkeit, die Leseeinheit unabhängig von der Schlitzeinheit zu separieren ist nicht vorgesehen. Darüber hinaus ist die Schlitzklappe Teil der Leseeinheit. Der Schlitz bleibt offen, wenn die Leseeinheit mit der Schlitzklappe entfernt wird.

Der Erfindung liegt die Aufgabe zugrunde, eine Kartenlesevorrichtung zu schaffen, welche die Wartungsarbeiten vereinfacht und keine besondere Anpassung an unterschiedliche Wanddicken erfordert.

Diese Aufgabe wird durch die Merkmale des Patentanspruchs 1 gelöst.

Bei der Erfindung ist eine separate Schlitzeinheit vorgesehen, die in der genormten Wandöffnung befestigbar ist. Die Schlitzeinheit enthält den Einsteckschlitz mit Schutzklappe. Sie weist einen rückseitigen Teil auf, in Form von zwei sich durch die Öffnung erstreckenden Ansätzen, mit denen die Leseeinheit lösbar verbunden ist. Die Leseeinheit ist auf die Ansätze der Schlitzeinheit aufsteckbar, wobei die Aufsteckbarkeit eine Schnappverbindung ermöglicht, um die Leseeinheit an der Schlitzeinheit zu sichern. Die sich durch die Öffnung erstreckenden Ansätze der Schlitzeinheit sind derart, daß sie die Schlitzeinheit seitlich bzw. nach oben und unten festlegen.

Die Montage bzw. Demontage der Leseeinheit ist daher äußerst einfach. Ist ein Ausbau der Leseeinheit zwecks Austausch oder Wartung erforderlich, braucht sie lediglich von dem rückwärtigen Teil der Schlitzeinheit gelöst zu werden. Werkringe hiefür sind nicht erforderlich. Die Schlitzeinheit kann an der Wand verbleiben. Ein weiterer Vorteil ist die Anpassung an unterschiedliche Blechdicken der Automatenwand.

Die Leseeinheit weist üblicherweise einen Träger auf, auf den die notwendigen Teile der Leseeinheit angebracht sind. Üblicherweise ist eine Platine mit den elektrischen Verbindungen und Komponenten vorgesehen. Träger und Platine werden miteinander in geeigneter Weise verbunden. Der Träger weist nach einer Ausgestaltung der Erfindung eine Anschlagfläche auf, die gegen die Innenseite der Wand anliegt. Die Befestigungskonstruktion ist derart, daß die Leseeinheit jeweils bis zur Rückseite der Wand geführt ist, so daß ihr Abstand relativ zum Einsteckschlitz in der Schlitzeinheit unterschiedlich ist. Dies ist für die Wirksamkeit der Leseeinheit jedoch nicht von Bedeutung.

Nach einer Ausgestaltung der Erfindung weist die Schlitzeinheit innerhalb der hohl ausgeführten Ansätze eine Gewindebohrung auf, in die eine Schraube einschraubbar ist. Zwischen der Schlitzeinheit und der Wandinnenseite ist ein Abstandsstück angeordnet. Die Schlitzeinheit kann auf diese Weise festgeschraubt werden, wobei sich das Abstandsstück gegen die Wandinnenseite anlegt. Das Abstandsstück kann ein U-förmiges, vorzugsweise aus Metallblech gefertigtes Bauteil sein, dessen Schenkel zur einen Seite verlängert sind. Die Schraube kann zunächst um ein gewisses Maß eingedreht werden. Anschließend kann das U-förmige Abstandsteil über die Schraube gesteckt werden, wonach die Schraube weitergedreht wird, bis sich ihr Kopf gegen die Schenkel bzw. den Steg des U-förmigen Bauteils anlegt und das Abstandsstück fest zwischen Schraubenkopf und Wandinnenseite klemmt.

Um eine einfache Verbindung zwischen Ansätzen und dem Träger der Leseeinheit zu erzielen, sieht eine Ausgestaltung der Erfindung vor, daß die Ansätze mit dem Träger über eine lösbare Schnappverbindung verbunden sind. Die Ansätze sind nach einer weiteren Ausgestaltung der Erfindung vorzugsweise zapfenartig, beispielsweise im Querschnitt rechteckig und hohl und greifen passend in Fassungsabschnitte des Trägers. In den Fassungsabschnitten können Federzungen oder dergleichen vorgesehen werden, die in eine Ausnehmung der Ansätze eingreifen, um eine Verriegelung der Leseeinheit an den Ansätzen zu erreichen.

Die Oberseite der Leseeinheit, die üblicherweise von einer Platine gebildet ist, kann durch einen entsprechenden Deckel aus Kunststoffmaterial abgedeckt sein, wobei der Deckel Öffnungen aufweist für die Durchführung von Leitungen oder zur Ermöglichung einer Lichtstrecke, beispielsweise einer IR-Übertragungsstrecke.

Nach einer weiteren Ausgestaltung der Erfindung ist die Steuereinheit in einem separaten Gehäuse untergebracht, das auf der Oberseite der Leseeinheit oder einem entfernten Ort angebracht ist. Im ersteren Fall kann das Gehäuse der Steuereinheit auf der Oberseite der Abdeckung für die Leseeinheit angebracht sein. Die beiden Gehäuse werden in geeigneter Weise miteinander verbunden, beispielsweise mit Hilfe einer Klammer, die in zwei benachbarte C-förmige Schlitze der Gehäuse einsteckbar ist. Im anderen Fall muß eine entsprechende Energie- und Signalübertragung zwischen Lese- und Steuereinheit stattfinden, beispielsweise über Kabel. Alternativ kann auch eine IR-Übertragungsstrecke vorgesehen werden. Eine solche Lösung ist dann sinnvoll, wenn gespeicherte Daten, z.B. einer elektronischen Geldbörse, nicht so leicht zerstörbar sein sollen. Ist die Steuereinheit und die Leseeinheit als Kompakteinheit, z.B. an der Automatentür angebracht, kann sie etwa durch Vandalismus zerstört werden.

Bei Ausbau der Leseeinheit soll nach Möglichkeit verhindert werden, daß die eine Karte in den Schlitz der Schlitzeinheit eingeführt wird. Daher sieht eine Ausgestaltung der Erfindung vor, daß auf der Rückseite der Schlitzeinheit unterhalb der Schutzklappe ein Sperrelement schwenkbar gelagert ist, vorzugsweise ein zweiarmiger Hebel, der in der Sperrstellung in eine Ausnehmung der Schutzklappe eingreift. Wenn die Wartungsperson die Leseeinheit entfernt, kann sie das Sperrelement betätigen und dadurch eine Betätigung der Schutzklappe sperren.

Die Erfindung wird nachfolgend anhand von Zeichnungen näher erläutert.
Fig. 1 ist eine Explosionsdarstellung der Vorrichtung nach der Erfindung.
Fig. 2 zeigt perspektivisch die Vorderansicht einer Schlitzeinheit der Vorrichtung nach Fig. 1.
Fig. 3 zeigt perspektivisch die Rückansicht der Schlitzeinheit nach Fig. 2.
Fig. 4 ist ein Schnitt durch die Schlitzeinheit nach Fig. 2 in Richtung Pfeil 4-4.
Fig. 5 ist eine Seitenansicht der Vorrichtung nach Fig. 1 im eingebauten Zustand.
Fig. 6 ist eine Rückansicht der Vorrichtung nach Fig. 5 in Richtung Pfeil 6.
Fig. 7 ist eine Draufsicht auf die Vorrichtung nach Fig. 5 in Richtung Pfeil 7.
Fig. 8 ist eine Draufsicht auf ein Abstandselement für die Vorrichtung nach Fig. 1.
Fig. 9 ist die Darstellung des Elements nach Fig. 8 in Richtung Pfeil 9.
Fig. 10 ist die Darstellung des Elements nach Fig. 8 in Richtung Pfeil 10.
Fig. 11 zeigt perspektivisch eine Klammer zur Verbindung von Gehäusen der Vorrichtung nach Fig. 1.
Fig. 12 zeigt ein Blockschaltbild der Vorrichtung nach der Erfindung.

Bevor auf die einzelnen Figuren eingegangen wird, sei erwähnt, daß die Zeichnungen nicht maßstäblich sind und untereinander nicht die tatsächlichen Größenverhältnisse widerspiegeln.

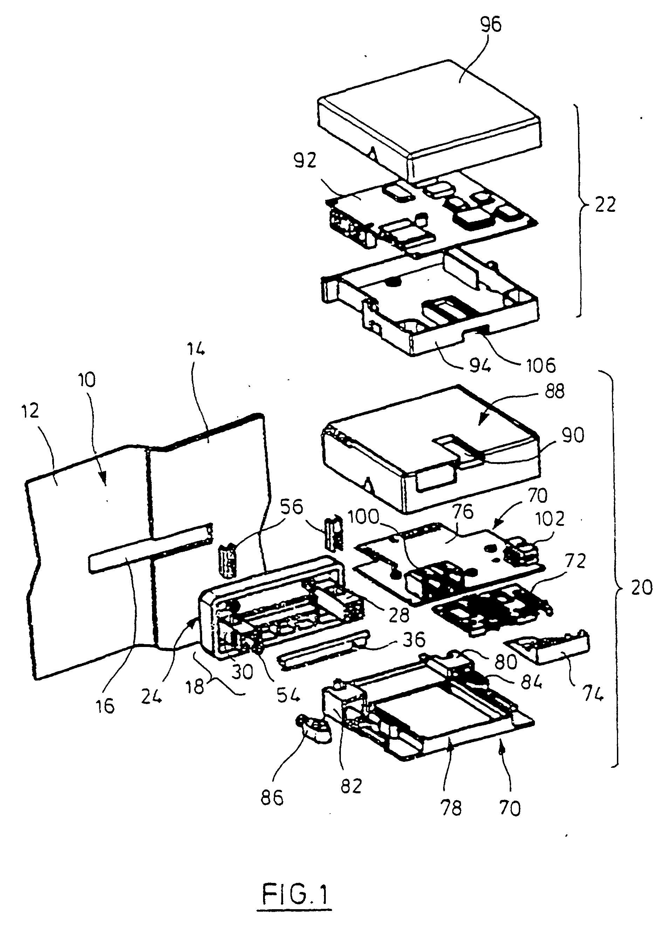

Die Herstellung nach Fig. 1 zeigt einen Abschnitt einer Tür 10, zum Beispiel eines Automaten, für den die Lesevorrichtung vorgesehen ist. Die Tür 10 ist in zwei verschiedenen Abschnitten 12, 14 dargestellt. Dies geschieht nur, um zu demonstrieren, daß die Dicke der Tür unterschiedlich sein kann. Es versteht sich, daß eine bestimmte Tür jeweils nur eine Dickenabmessung hat.

In der Tür 10 ist eine längliche rechteckige Öffnung 16 vorgesehen. An der Öffnung 16 ist die Lesevorrichtung anzubauen, damit eine Karte eingeführt werden kann. Die Abmessungen der Öffnung 16 sind standardisiert.

Die Lesevorrichtung nach Fig. 1 umfaßt eine Schlitzeinheit 18, eine Leseeinheit 20 und eine Steuereinheit 22. Die einzelnen Einheiten 18 bis 22 werden nachfolgend näher besprochen, wobei auch auf die übrigen Figuren Bezug genommen wird.

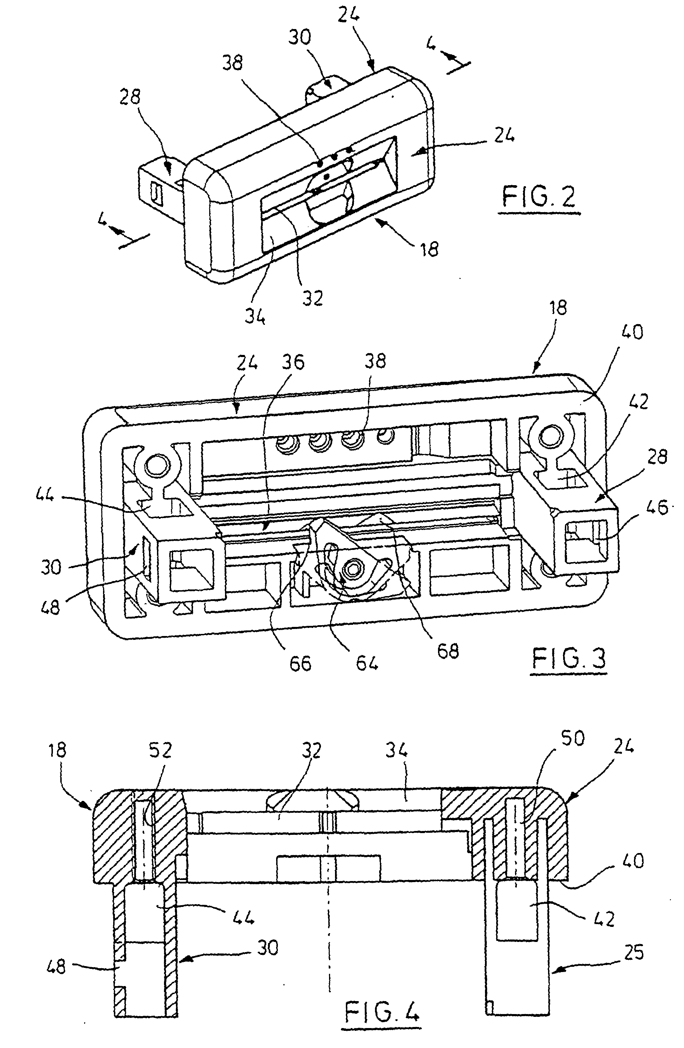

Die Schlitzeinheit 18 weist einen einteilig aus Kunststoffmaterial geformten Körper 24 auf. Der Körper 24 besteht aus einem länglichen klotzartigen Abschnitt 26 und zwei einteilig mit diesem geformten parallel beabstandeten Ansätzen 28, 30. Der Klotz 26 weist einen Einsteckschlitz 32 auf am Grund einer im Querschnitt dreieckförmigen Ausnehmung 34. Wie in Fig. 3 zu erkennen, ist dem Schlitz eine Klappe 36 zugeordnet, die um eine horizontale Achse schwenkbar gelagert ist. Die Klappe ist so ausgeführt, daß sie nur geöffnet werden kann, wenn eine Karte über ihre Schmalseite eingeführt wird. Werden andere Gegenstände eingeführt, sperrt die Klappe. Eine derartige Schutzklappe ist jedoch an sich bekannt.

Oberhalb der Ausnehmung 34 ist eine Reihe von Löchern 38 angeordnet. Sie dienen zur Aufnahme von Leuchtdioden.

Die Rückseite des Klotzes 26 weist eine umlaufende Anschlagfläche 40 auf. Wie in Fig. 3 zu erkennen, sind die Ansätze 28, 30 pfostenartig und quadratisch im Querschnitt. Sie sind außerdem hohl. Die pfostenartigen Ansätze 28, 30 haben einen Querdurchgang 42, 44. Weiter zum freien Ende hin ist an der Außenseite jeweils eine Ausnehmung 46 bzw. 48 vorgesehen. Zum freien Ende ist der Hohlraum der Ansätze 28, 30 offen. Ausgerichtet zur Achse der Ansätze 28, 30 ist im Klotz 26 jeweils eine Gewindebohrung 50, 52 geformt.

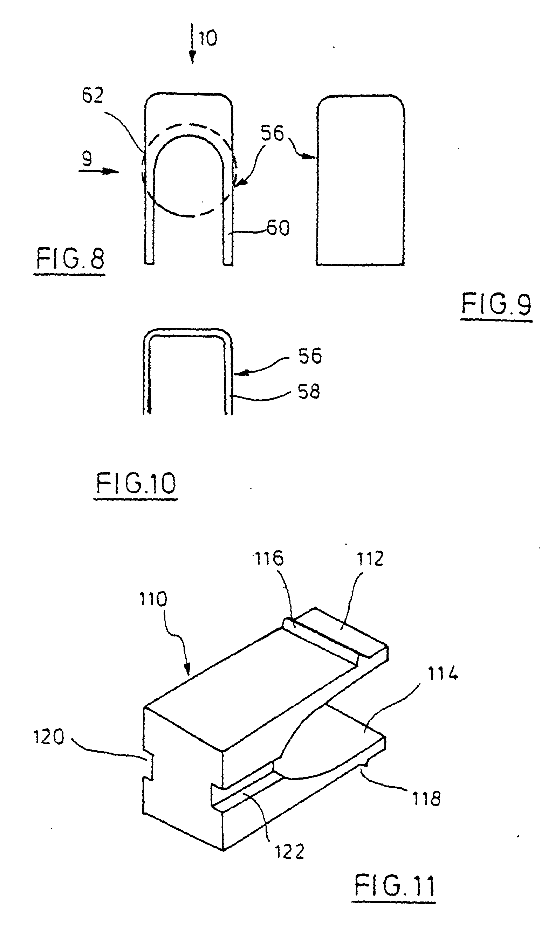

Der Abstand der Außenseiten der Ansätze 28, 30 entspricht etwa dem Breitenmaß der Öffnung 16 in der Tür 10. Die Dicke der Ansätze 28, 30 entspricht annähernd dem Höhenmaß der Öffnung 16. Die Ansätze 28, 30 können daher so in die Öffnung 16 eingeführt werden, daß die Schlitzeinheit 18 zur Seite und nach oben und unten gesichert in der Öffnung 16 angeordnet ist. Mit Hilfe von Schrauben, von denen eine bei 54 in Fig. 1 dargestellt ist, kann die Schlitzeinheit an der Tür 10 befestigt werden. Die Schrauben 54 werden über das freie Ende in die Ansätze 28, 30 eingeführt und in die Bohrungen 50, 52 über eine gewisse Strecke eingeschraubt. Dann werden Abstandsstücke 56 (Fig. 1) in die Durchbrüche 42, 44 eingesteckt. Die Form der Abstandsstücke geht deutlicher aus den Figuren 8 bis 10 hervor. Wie aus Fig. 10 zu erkennen, bestehen sie aus einem ersten U-Profil 58, dessen Schenkel zum einen Ende hin verlängert sind, so daß ein zweites U-Profil 60 gebildet ist. In der in Fig. 10 gezeigten Position wird das Abstandselement 56 in die Durchbrüche 42, 44 eingesetzt, wobei das U-Profil 60 den Schaft der Schraube umgreift. Anschließend wird die Schraube weiter festgezogen, bis der Kopf der Schraube gegen das Abstandselement 56 zur Anlage gelangt. Der Umriß des Kopfes ist in Fig. 8 gestrichelt bei 62 angedeutet. Dadurch ist die Schlitzeinheit 18 sicher an der Tür 10 befestigt.

Wie aus Fig. 3 hervorgeht, ist an der Rückseite des Klotzes 26 in einer Ausnehmung unterhalb der Klappe 36 ein kurzer zweiarmiger Hebel 64 um eine horizontale Achse schwenkbar gelagert. Er kann eine neutrale Position einnehmen, die gestrichelt dargestellt ist. Wahlweise kann er verschwenkt werden in eine in durchgezogenen Linien gezeigte Position. Dabei greift er in eine dreieckförmige Ausnehmung 66 an der Rückseite der Klappe 36 an. Bei einer Verschwenkung entgegengesetzt der Uhrzeigerrichtung kann der andere Hebelarm mit der zweiten Ausnehmung 68 in Eingriff gelangen. Dadurch kann die Klappe 36 nicht mehr verschwenkt werden. Die einzelnen Positionen des zweiarmigen Klinkenhebels 64 sind vorzugsweise selbsthaltend, was durch entsprechende Reibungseingriffe erreicht werden kann.

Die Leseeinheit 20 weist ein plattenartiges Teil 70 auf, das in Fig. 1 zweimal gezeichnet ist. In der unteren Darstellung ist die Unterseite und in der oberen Darstellung die Oberseite zu erkennen, wobei bezüglich der oberen Darstellung ein oberer Abschnitt 72 und ein unterer Abschnitt 74 der Kontaktiereinheit herausgezeichnet sind. Sie sind sonst mit einer Platine 76 verbunden. Mit der Platine 76 ist auch ein rahmenförmiger Träger 78 verbunden. Dieser weist an einem Ende im Abstand voneinander angeordnete Fassungsabschnitte 80, 82 auf, die so geformt sind, daß sie passend auf die Ansätze 28, 30 aufschiebbar sind. Den Fassungsabschnitten 80, 82 ist ein Federelement 84 bzw. 86 (86 ist separat dargestellt) zugeordnet, die von innen in die Ansätze 28, 30 eingreifen und mit einem Hakenabschnitt in die Öffnung 46 bzw. 48 der Ansätze 28, 30 einrasten. Dadurch ist die Leseeinheit an der Schlitzeinheit und an der Tür 10 sicher angebracht. Sie kann jedoch leicht wieder gelöst werden, indem die Leseeinheit abgezogen wird bei gleichzeitigem Außereingriffbringen der Federelemente 84, 86. Nach der Verrastung liegt der Träger 78 an der Rückwand der Tür 10 an. Die Leseeinheit 20 hat daher eine vorgegebene Position relativ zur Öffnung 16 bzw. zur Schlitzeinheit 18.

Die Leseeinheit ist durch einen Deckel 88 verschlossen, der von seiner oberen Seite am rückwärtigen Ende einen Befestigungsschlitz 90 aufweist. Auf diesen wird weiter unten noch eingegangen.

Eine Platine 92 der Steuereinheit 22 wird von einem kastenförmigen Gehäuse aufgenommen, das ein Unterteil 94 und ein Deckelteil 96 aufweist.

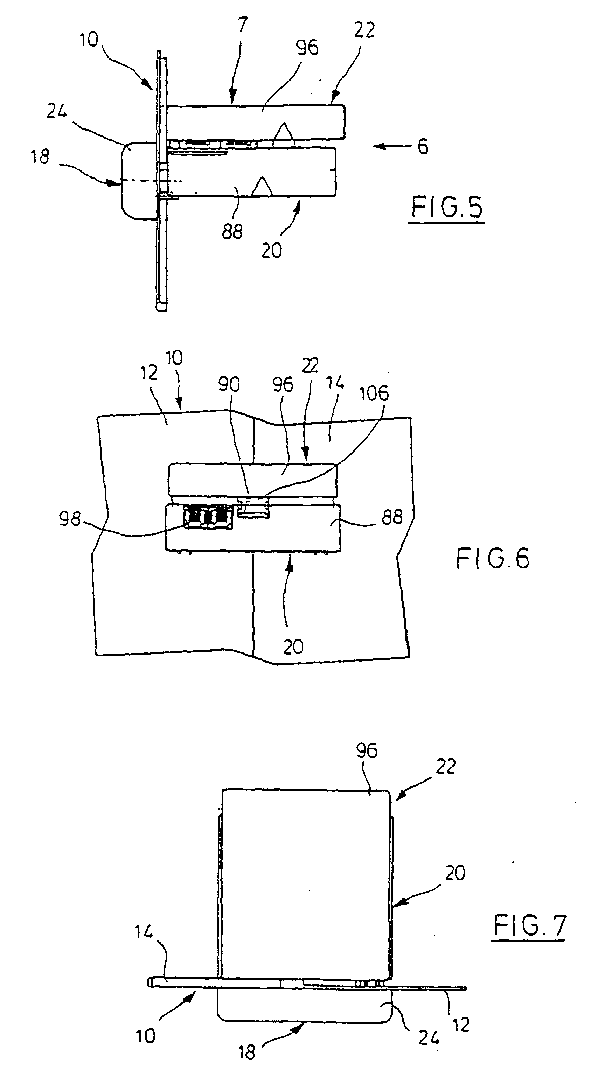

In den Figuren 5 bis 7 ist die Montage der drei Einheiten nach Fig. 1 gezeigt. Man erkennt, daß die montierte Steuereinheit 22 auf der montierten Leseeinheit 20 angeordnet ist. Der Deckel 88 der Leseeinheit 20 weist Durchbrüche auf, von denen einer bei 98 gezeigt ist für eine Verbindung mit Anschlußblöcken 100, 102 auf der Platine 76 (Fig. 1). Von den Blöcken 100, 102 können Kabel zur Steuereinheit 22 geführt werden (nicht gezeigt). Um den Steuerteil 22 zu fixieren, ist dieser am unteren Gehäuseteil 94 mit einem Befestigungsschlitz 106 versehen. Die Schlitze 90, 106 sind im Querschnitt schwalbenschwanzförmig. Sie nehmen Schenkel einer Befestigungsklammer auf, wie in Fig. 11 dargestellt ist. Die Klammer ist mit 110 bezeichnet und weist die Schenkel 112, 114 auf, die in die Schlitze 90, 106 eingeschoben werden. Rippenartige Erhebungen 116, 118 an den Außenseiten der Schenkel 112, 114 sorgen für eine Sicherung in den Befestigungsschlitzen 90, 106. Auf gegenüberliegenden Seiten geformte Nuten 120, 122 dienen zur Aufnahme der Verengung der Befestigungsschlitze 90, 106.

Es ist jedoch auch denkbar, die Steuereinheit separat im Automaten unterzubringen. Es ist jedoch erforderlich, eine Signalverbindung herzustellen. Dies kann über Kabel geschehen oder über eine kontaktlose Übertragungsstrecke, beispielsweise über eine Infrarotlicht-Übertragungsstrecke. Derartige Übertragungsstrecken sind an sich bekannt. Es muß im Automaten gewährleistet sein, daß bei geschlossener Tür 10 eine direkte Verbindung zwischen Leseeinheit 20 und Steuereinheit 22 gewährleistet ist.

Die Schlitzeinheit 18 ist nicht in den Signalkreis eingebunden. Allerdings ist eine Versorgung der Leuchtdioden erforderlich, die in den Löchern 38 unterzubringen sind. Dies kann über entsprechende Steckkontakte erfolgen. Es ist jedoch auch möglich, die Leuchtdioden auf der Platine 76 anzubringen. In diesem Fall sind jedoch entsprechende Öffnungen in der Tür 10 vorzusehen, damit das Licht von den Leuchtdioden auf der Platine durch die Löcher 38 treten kann. Schließlich ist auch denkbar, eine Lichtübertragung durch Lichtleiter vorzunehmen von Dioden auf der Platine zu den Löchern 38 der Schlitzeinheit 18.

Die Schlitzeinheit kann zusätzlich mit Tastern und/oder einem Display versehen sein. Hierfür ist eine Direktverbindung mit der Leseeinheit bzw. der Steuereinheit über elektrische Leitungen erforderlich. Die Verbindung kann auch dadurch hergestellt werden, daß eine elektrische Steckverbindung zwischen den genannten Teilen hergestellt wird, die durch Zusammenfügen der Einheiten automatisch die elektrische Verbindung aufbaut.

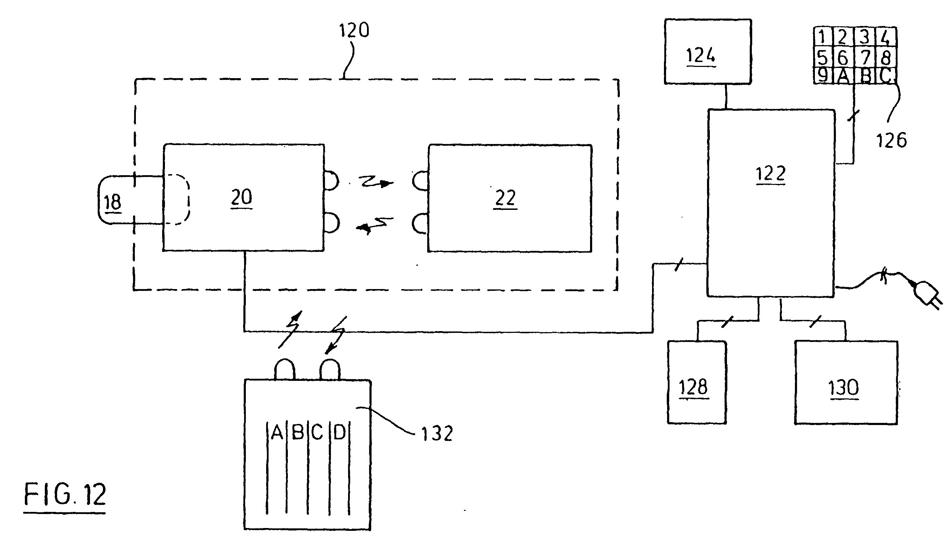

In Fig. 12 ist die Lesevorrichtung, die aus Schlitzeinheit 18, Leseeinheit 20 und Steuereinheit 22 besteht, mit 120 bezeichnet. Sie ist Bestandteil eines Automaten, der eine Steuerung 122 aufweist. Die Steuereinheit 22 ist mithin mit der Steuerung 122 für den Automaten verbunden. Die Automatensteuerung 122 ist mit einem Display 124 und einer Eingabeeinheit 126 verbunden. An letzterer kann der Kunde eine bestimmte Ware anwählen. Ein Münzprüfer 128 prüft, ob eingeworfene Münzen gültig sind und errechnet die Höhe der eingeworfenen Geldsumme. Eine Ausgabeeinheit 130 gibt dann die angewählte Ware aus, wenn die Voraussetzungen erfüllt sind.

In Fig. 12 ist zu erkennen, daß Leseeinheit 20 und Steuereinheit 22 über eine kontaktlose Strecke, wie sie oben bereits mehrfach erwähnt wurde, in Verbindung stehen. Insbesondere kommt eine Übertragung über Infrarotlicht oder Funk in Betracht. Lediglich eine Spannungsversorgung zur Leseeinheit 20 ist noch notwendig, die normalerweise bereits für Display oder Wahltasten oder andere Funktionen an der Tür des Automaten vorzusehen ist.

Die Schnittstelle zwischen Leseeinheit 20 und Steuereinheit 22 kann auch dazu benutzt werden, von außerhalb Daten einzulesen oder auszulesen, was durch ein Steuergerät 132 angedeutet sein soll.

## Patentansprüche

1. Kartenlesevorrichtung, die an einer Wand eines Automaten angebracht ist mit einer Schlitzeinheit, die einen Einsteckschlitz für eine Karte aufweist, in der eine Schlitzklappe schwenkbar gelagert ist und die an der Wand befestigt ist und sich beidseitig der Wandöffnung erstreckt und einer zum Einsteckschlitz ausgerichteten Leseeinheit, in die die Karte eingeführt wird, wenn sie vollständig in den Einsteckschlitz eingeschoben wird und die einen Träger aufweist, der an der Rückseite der Schlitzeinheit angebracht ist und einer mit der Leseeinheit verbundenen Steuereinheit, **dadurch gekennzeichnet, daß** die Schlitzeinheit (18) zwei sich durch die Wandöffnung (16) erstreckende Ansätze (28, 30) aufweist, welche die Schlitzeinheit in der Wandöffnungseitlich bzw. nach oben und unten festlegen und die Ansätze (28, 30) auf der Wandinnenseite an der Wand befestigt sind, die Ansätze (28, 30) mit dem Träger (78) über eine lösbare Schnappverbindung verbunden sind und die Schutzklappe (36) in der Schlitzeinheit (18) gelagert ist.

2. Vorrichtung nach Anspruch 1, **dadurch gekennzeichnet, daß** der Träger (78) eine Anschlagfläche aufweist, die gegen die Innenseite der Wand (12, 14) anliegt.

3. Vorrichtung nach Anspruch 1 oder 2, **dadurch gekennzeichnet, daß** die Ansätze (28, 30) mit einem in einer Queröffnung der Ansätze (28, 30) einsetzbaren Klemmkeil befestigbar sind.

4. Vorrichtung nach einem der Ansprüche 1 bis 3, **dadurch gekennzeichnet, daß** die Schlitzeinheit (18) innerhalb der hohl ausgeführten Ansätze (28, 30) eine Gewindebohrung (50, 52) aufweist, in die eine Schraube (54) einschraubbar ist und zwischen dem Schraubenkopf und der Wandinnenseite ein Abstandsstück (56) angeordnet ist.

5. Vorrichtung nach Anspruch 4, **dadurch gekennzeichnet, daß** das Abstandsstück ein U-förmiges, vorzugsweise aus Metallblech geformtes Bauteil ist, dessen Schenkel (58) zur einen Seite hin verlängert (60) sind.

6. Vorrichtung nach einem der Ansprüche 1 bis 5, **dadurch gekennzeichnet, daß** die zapfenförmigen Ansätze (28, 30) in einen Fassungsabschnitt (80, 82) des Trägers (78) passend eingreifen.

7. Vorrichtung nach Anspruch 6, **dadurch gekennzeichnet, daß** die Fassungsabschnitte (80, 82) eine Federzunge (84, 86) aufweisen, die in eine Ausnehmung (48, 46) der Ansätze (28, 30) eingreifen.

8. Vorrichtung nach einem der Ansprüche 1 bis 7, **dadurch gekennzeichnet, daß** die Oberseite der Leseeinheit (20) mit einer Kappe (88) abdeckbar ist, die Öffnungen aufweist für die Energie- und/oder Signalübertragung von der Steuereinheit (22).

9. Vorrichtung nach einem der Ansprüche 1 bis 8, **dadurch gekennzeichnet, daß** die Steuereinheit (22) in einem separaten Gehäuse (94, 96) untergebracht ist, das auf der Oberseite der Leseeinheit (20) oder an einem entfernten Ort angebracht ist.

10. Vorrichtung nach Anspruch 9, **dadurch gekennzeichnet, daß** eine obere Kappe (Abdeckung 88) für die Leseeinheit (20) und die auf der Abdeckung (88) liegende Wand des Gehäuses (94, 96) jeweils einen kanalartigen im Schnitt C-förmigen Schlitz (90, 106) aufweisen zur Aufnahme jeweils eines Schenkels (112, 114) einer U-förmigen Halteklemme (110), durch welche Leseeinheit (20) und Steuereinheit (22) miteinander verbunden sind.

11. Vorrichtung nach Anspruch 10, **dadurch gekennzeichnet, daß** zwischen der Leseeinheit und der entfernt angeordneten Steuereinheit eine IR-Übertragungsstrecke vorgesehen ist für die Signalübertragung zwischen den Einheiten.

12. Vorrichtung nach einem der Ansprüche 1 bis 11, **dadurch gekennzeichnet, daß** auf der Rückseite der Schlitzeinheit (18) unterhalb der Schutzklappe (36) ein Sperrelement (64) schwenkbar gelagert ist, das in der Sperrstellung eine Betätigung der Schutzklappe (36) sperrt.

13. Vorrichtung nach Anspruch 12, **dadurch gekennzeichnet, daß** das Sperrelement (64) ein zweiarmiger Hebel ist, dessen Arme mit einer Ausnehmung (66, 68) der Schutzklappe (36) zusammenwirken, wenn es in seiner Sperrstellung ist.

14. Vorrichtung nach einem der Ansprüche 1 bis 13, **dadurch gekennzeichnet, daß** das Schlitzelement (18) einteilig aus Kunststoff geformt ist.

15. Vorrichtung nach einem der Ansprüche 1 bis 14, **dadurch gekennzeichnet, daß** die Schlitzeinheit Tasten und/oder ein Display aufweist zur Bedienung des Automaten.

16. Vorrichtung nach Anspruch 15, **dadurch gekennzeichnet, daß** die elektrische Verbindung der Tasten bzw. ihrer Schalter und/oder des Displays mit der Lese- bzw. Steuereinheit über eine Steckverbindung erfolgt, die zwischen der Schlitz- und der Leseeinheit vorgesehen ist und automatisch hergestellt wird, wenn die Teile zusammengefügt werden.

## Claims

1. Card reader, which is attached to a wall of a vending machine with a slot unit, which has an insertion slot for a card, in which a slot flap is swivel-mounted and which is attached to the wall and extends on both sides of the wall opening and a reader unit aligned with the insertion slot, into which the card is inserted, if it is completely inserted into the insertion slot and that has a mount, which is attached to the back side of the slot unit and a control unit connected with the reader unit, **characterized in that** the slot unit (18) has two appendages (28, 30) extending through the wall opening (16), which immobilize the slot unit in the wall opening laterally and from top to bottom, and **in that** the appendages (28, 30) are attached to the inside of the wall, the appendages (28, 30) are connected with mount (78) via a detachable snap-on connection and the protective flap (36) is supported in the slot unit (18).

2. Device according to claim 1, **characterized in that** the mount (78) has a stop surface, which lies against the inside of the wall (12, 14).

3. Device according to claim 1 or 2, **characterized in that** the appendages (28, 30) can be clamped with a clamp block that can be installed in a transverse opening of the appendages (28, 30).

4. Device according to one of claims 1 through 3, **characterized in that** the slot unit (18) has a threaded hole (50, 52) within the hollow appendages (28, 30), into which a screw (54) can be screwed and a spacer (56) is arranged between the screw head and the inside wall.

5. Device according to claim 4, **characterized in that** the spacer is a U-shaped component, preferably made of metal, the legs (58) of which are elongated towards one side (60).

6. Device according to one of claims 1 through 5, **characterized in that** pointed appendages (28, 30) engage in a suitable manner in a support section (80, 82) of the mount (78).

7. Device according to claim 6, **characterized in that** support sections (80, 82) have a spring tab (84, 86), which engages in a recess (48, 46) of the appendages (28, 30).

8. Device according to one of claim 1 through 7, **characterized in that** the top side of the reader unit (20) is covered with a cap (88), which has openings for the power and/or signal transmission from the control unit (22).

9. Device according to one of claims 1 through 8, **characterized in that** the control unit (22) is accommodated in a separate housing (94, 96), which is attached to the top side of the reader unit (20) or at a remote location.

10. Device according to claim 9, **characterized in that** an upper cap (cover 88) for the reader unit (20) and the wall lying on the cover (88) of the housing (94, 96) each have a C-shaped slot (90, 106) that is channel-like in cross-section for the accommodation of one leg (112, 114) each of a U-shaped retaining clamp (110), via which the reader unit (20) and the control unit (22) are connected to each other.

11. Device according to claim 10, **characterized in that** an IR transmission network is provided between the reader unit and the remotely arranged control unit for the signal transmission between the units.

12. Device according to one of claims 1 through 11, **characterized in that** a blocking element (64), which blocks an actuation of the protective flap (36) in the blocked position, is swivel-mounted on the back side of the slot unit (18) below the protective flap (36).

13. Device according to claim 12, **characterized in that** the blocking element (64) is a two-armed lever, the arms of which work together with a recess (66, 68) of the protective flap (36) when it is in its blocked position.

14. Device according to one of claims 1 through 13, **characterized in that** the slot element (18) is formed from a single piece of plastic.

15. Device according to one of claims 1 through 14, **characterized in that** the slot unit has buttons and/or a display for the operation of the vending machine.

16. Device according to claim 15, **characterized in that** the electrical connection of the buttons or their switches and/or the display takes place with the reader or control unit via a plug and socket connection, which is provided between the slot and the reader unit and is automatically established when the parts are joined together.

## Revendications

1. Dispositif de lecture de cartes, lequel est appliqué sur la paroi d'un automate, avec une unité à fente présentant une fente d'introduction pour une carte où est logé un volet de fente pivotant, et qui est fixée sur la paroi et s'étend des deux côtés de l'ouverture de paroi, avec une unité de lecture alignée sur la fente d'introduction, où la carte est insérée quand elle est complètement engagée dans la fente d'introduction et qui présente un support appliqué à l'arrière de l'unité à fente, et avec une unité de commande reliée à l'unité de lecture, **caractérisé en ce que** l'unité à fente (18) présente deux bras (28, 30) s'étendant au travers de l'ouverture de paroi (16), lesquels fixent l'unité à fente dans l'ouverture de paroi latéralement ou en haut et en bas, et **en ce que** les bras (28, 30) sont fixés à la paroi sur la face intérieure de paroi, les bras (28, 30) sont reliés au support (78) par un raccord à enclenchement amovible, et le volet de protection (36) est logé dans l'unité à fente (18).

2. Dispositif selon la revendication 1, **caractérisé en ce que** le support (78) présente une surface de butée reposant contre la face intérieure de paroi (12, 14).

3. Dispositif selon la revendication 1 ou 2, **caractérisé en ce que** les bras (28, 30) sont fixables par une cale de serrage insérable dans une ouverture transversale des bras (28, 30).

4. Dispositif selon l'une des revendications 1 à 3, **caractérisé en ce que** l'unité à fente (18) présente un alésage fileté (50, 52) à l'intérieur des bras (28, 30) creux, dans lequel peut être serrée une vis (54) et **en ce qu'**une pièce d'écartement (56) est disposée entre la tête de la vis et la face intérieure de paroi.

5. Dispositif selon la revendication 4, **caractérisé en ce que** la pièce d'écartement est un composant en forme de U, de préférence en tôle métallique profilée, dont les ailes (58) sont prolongées vers un côté (60).

6. Dispositif selon l'une des revendications 1 à 5, **caractérisé en ce que** les bras (28, 30) en forme de tenons sont chacun à engagement ajusté dans une section de châssis (80, 82) du support (78).

7. Dispositif selon la revendication 6, **caractérisé en ce que** les sections de châssis (80, 82) présentent chacune une lame flexible (84, 86) s'engageant dans un évidement (48, 46) des bras (28, 30).

8. Dispositif selon l'une des revendications 1 à 7, **caractérisé en ce que** le côté supérieur de l'unité de lecture (20) est recouvrable par un cache (88) présentant des ouvertures pour la transmission d'énergie et/ou de signaux depuis l'unité de commande (22).

9. Dispositif selon l'une des revendications 1 à 8, **caractérisé en ce que** l'unité de commande (22) est mise en place dans un boîtier séparé (94, 96) appliqué sur le côté supérieur de l'unité de lecture (20) ou à un emplacement éloigné.

10. Dispositif selon la revendication 9, **caractérisé en ce qu'**un cache supérieur (couvercle 88) pour l'unité de lecture (20) et la paroi du boîtier (94, 96) reposant sur le couvercle (88) présentent respectivement une fente en forme de canalisation à section en C (90, 106), pour la réception d'un bras (112, 114) d'une pince de maintien en forme de U (110), par laquelle l'unité de lecture (20) et l'unité de commande (22) sont reliées l'une à l'autre.

11. Dispositif selon la revendication 10, **caractérisé en ce qu'**un trajet de transmission d'infrarouges est prévu entre l'unité de lecture et l'unité de commande disposée à distance, pour la transmission de signaux entre les unités.

12. Dispositif selon l'une des revendications 1 à 11, **caractérisé en ce qu'**un élément de verrouillage (64) pivotant est logé sous le volet de protection (36) sur la face arrière de l'unité à fente (18), lequel, en position de verrouillage, bloque toute manoeuvre du volet de protection (36).

13. Dispositif selon la revendication 12, **caractérisé en ce que** l'élément de verrouillage (64) est un levier à deux bras, dont les bras coopèrent avec un évidement (66, 68) du volet de protection (36) quand l'élément est dans sa position de verrouillage.

14. Dispositif selon l'une des revendications 1 à 13, **caractérisé en ce que** l'élément à fente (18) est formé d'une seule pièce en matière synthétique.

15. Dispositif selon l'une des revendications 1 à 14, **caractérisé en ce que** l'unité à fente présente des touches et/ou un écran pour la commande de l'automate.

16. Dispositif selon la revendication 15, **caractérisé en ce que** la connexion électrique des touches ou de leur commutateur et/ou de l'écran avec l'unité de lecture ou de commande est obtenue par un raccord à fiche prévu entre l'unité à fente et l'unité de lecture et est automatiquement réalisée quand les pièces sont assemblées.
